Europäisches Patentamt

European Patent Office

Office européen des brevets

(19)

(11) Publication number: **0 344 485**
**A2**

# EUROPEAN PATENT APPLICATION

(21) Application number: 89108221.6

(22) Date of filing: 07.05.89

(51) Int. Cl.⁴: **C08J 7/18 , C08J 7/04**

(30) Priority: 16.05.88 IT 2059188

(43) Date of publication of application:
06.12.89 Bulletin 89/49

(84) Designated Contracting States:
**DE ES FR GB SE**

(71) Applicant: **COLOR-DEC ITALY S.r.l.**
**Via Callagrande Località le Bocchette**
**I-55040 Capezzano Pianore (Lucca)(IT)**

(72) Inventor: **Muscionico, Guido**
**Via S. Rocco, 32**
**I-10021 Cambiano (Torino)(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) Process for the surface activation of products made of plastic material based on polypropylene and mixtues or alloys thereof and liquid compsition used in the process.

(57) Process for the surface activation of products made of plastic material based on polypropylene and mixtures or alloys thereof, wherein the product to be treated is initially painted with a liquid composition of polyolefinic synthetic organic resins dissolved in organic solvents, then thoroughly dried and finally subjected to ultraviolet light radiation. The product thus treated is in an optimum condition for receiving a finishing coat of products traditionally adopted for this purpose, towards which it displays excellent adherence characteristics.

EP 0 344 485 A2

# PROCESS FOR THE SURFACE ACTIVATION OF PRODUCTS MADE OF PLASTIC MATERIAL BASED ON POLYPROPYLENE AND MIXTURES OR ALLOYS THEREOF AND LIQUID COMPOSITION USED IN THE PROCESS

The present invention relates to a process for the surface activation of products made of plastic material based on polypropylene and mixtures or alloys thereof. More in particular, the invention relates to a surface-activation process which confers upon manufactured articles made of polypropylene-based plastic materials particularly satisfactory adherence characteristics with respect to subsequent finishing coatings.

The invention furthermore relates to a particular liquid composition used in said process.

It is known that polypropylene and alloys or mixtures thereof constitute a class of plastic materials which offers important chemical, physical and mechanical characteristics and furthermore has a modest cost. Such favorable characteristics make this material very interesting in many manufacturing sectors, such as components for cars and vehicles in general, household furnishings, household appliances and others.

Along with these advantageous and positive characteristics, polypropylene-based plastic materials have however a considerable drawback which has severely limited their use in the above-mentioned sectors. Said materials have high chemical inertness and surface tension due to the crystalline molecular structure typical of this polymer, which deprives it of the polar functionality which is indispensable for "binding" the coats of finishing materials, such as paints or others, which may be applied thereon.

In other words, the adherence characteristics that polypropylene materials exhibit with respect to the different possible paint or adhesive products conventionally employed for the surface finishing of plastic materials are absolutely insufficient and do not allow the application of any finishing coat except after an adequate surface treatment of the product on which said coat is to be applied.

One of the currently most widespread pretreatments consists of a surface flame hardening. The products to be treated are subjected to the action of an unshielded flame, the action whereof provides a surface modification of polypropylene's structural characteristics to the point of giving it adherence characteristics adequate for the stable bonding of a finishing coat.

It can be easily understood, however, that such a process has considerable disadvantages. First of all, the presence of unshielded flames in paint shops is very dangerous. Secondly, if the flame-hardening treatment is performed manually - as occurs in small industries - the operation must be performed by skilled workers and is therefore very expensive; finally, the final quality of the product depends essentially on the operator due to the fact that it is an essentially manual process, and the percentage of products rejected due to burns or to insufficient surface activation of polypropylene is always high. On the contrary, if the flame hardening treatment is performed automatically - as occurs in medium and large industries - it requires systems of rather high complexity which entails very high installation and maintenance costs. In any case, the flame hardening process often detrimentally and unpredictably modifies the mechanical and chemical-physical characteristics of the product, shortening its life or in any case making it impossible or unattractive to use in certain applications.

Other known pretreatments have been developed, employing different technologies, such as the corona effect, plasma treatments, actinic activation with ultraviolet radiation after wetting the product with benzophenone. The cost and complexity of such processes have in any case allowed only their very limited use.

In any case, all these processes, as well as the surface flame hardening process, suffer from a fundamental disadvantage, i.e. a particular sensitivity with respect to the nature of the surface of the specific product being treated. In fact, since all these processes act on the polymer's surface so as to alter it in the desired manner, any variations in the chemical-physical characteristics of the polymer outside the variability range foreseen during the design of the process, even local ones, may completely inhibit the activation of the product in the regions where such variations occur. In the subsequent step of covering with a finishing coat, the product may therefore have, in such regions, even highly visible flaws, such as to sometimes require the rejection of the entire product.

The aim of the present invention is therefore to overcome the above-mentioned disadvantages and provide a process which raises to a satisfactory level the adherence characteristics of a product manufactured with polypropylene-based plastic materials with respect to subsequent coating treatments with finishing coats, whether paints, adhesives or others, regardless of the surface chemical-physical characteristics of said product.

This aim is achieved, according to the present invention, by a process for the surface-activation of products made of plastic material based on polypropylene and mixtures or alloys thereof, characterized in that it comprises the following steps:

a) the application to said product of a liquid composition constituted by at least one polyolefinic resin, a photopolymerizable monomeric compound and a photoinitiator;

b) the drying of the product thus coated until it is completely dried;

c) the subjecting of said coated and dried product to an actinic light radiation source suitable for triggering the polymerization reaction of said photopolymerizable monomeric compound due to the catalytic triggering of said photoinitiator.

According to a preferred characteristic of the invention, the polyolefinic resin is a halogenated polypropylene resin, the photopolymerizable monomeric compound is an epoxy acrylic monomer, the photoinitiator is an ammino compound and the light radiation employed is an ultraviolet radiation of wavelength between 186 nm and 240 nm.

The invention is in any case now described in greater detail with reference to a particular and preferred embodiment thereof.

The surface-activation process according to the present invention is essentially based on the discovery of a particular liquid composition, the main component whereof is a resin which belongs to the same family as the polypropylene plastic material to be treated and has the ability to strongly adhere to the plastic material on which it is applied by virtue of the fact that one of its components is caused to partially polymerize in situ, thus creating a chemical bond, as well as a physical one, with the underlying material, offering at the same time a surface which is perfectly suitable for the stable bonding of subsequent finishing coats.

A resin suitable for the purpose is therefore any polyolefinic resin and preferably a polypropylene resin. Said resin is suitably halogenated so as to make it soluble in ordinary aliphatic or aromatic hydrocarbon solvents, and a cross-linking agent suitable for creating a cross-link between the polyolefinic resin and the plastic product, as well as a suitable catalytic initiator which allows triggering of the cross-linking reaction at the required instant and to make it proceed at a useful rate from an industrial point of view.

An epoxy acrylic monomeric compound is preferably used as cross-linking agent. A photoinitiator, and particularly an ammino photoinitiator, which is activated simply by means of an actinic light radiation and therefore with an absolutely safe and extremely practical system, is preferred as catalytic initiator.

Liquid compositions suitable for being successfully used in the surface-activation process according to the present invention have the following formulation:

- halogenated polypropylene resin 0.80 - 1.10%
- epoxy acrylic monomer 0.60 - 1.20%
- ammino photoinitiator 0.03%
- halogenated aliphatic hydrocarbon 90.00 - 98.00%
- aromatic hydrocarbon 0.00 - 2.00%

A preferred liquid composition comprises the above mentioned components, respectively in the following percentages:

1.00%, 0.95%, 0.03%, 97.00%, 1.02%, and therefore has a residue at dryness equal to 1.98%.

The above-described liquid composition can be applied to products to be treated according to any method known in the field of painting. It may therefore be sprayed on with or without air, by controlled sprinkling, with a means for its physical application, such as a roller or brush, or by immersion, according to the characteristics of the object to be treated and to the available methods. The duration of the process of applying the liquid composition, i.e. its period of contact with the surface of the products to be treated, is not particularly critical. In case of application by immersion, it is appropriate that the duration of said immersion not exceed 15 seconds at a bath temperature between 50 and 60° C; for methods of application different from immersion, a final thickness at dryness equal to 0.5-2 microns must be achieved.

The product to which the liquid composition has been applied must then be thoroughly dried; this can occur with a natural drying process at 22 ± 5° C for a period of time of approximately 15 minutes or with a forced-drying process with warm air at 50-80° C for a period of time of approximately 3-5 minutes.

The product thus dried is then subjected to an actinic light radiation suitable for triggering the cross-linking process of the epoxy acrylic monomer by virtue of the catalytic action of the ammino photoinitiator. Light irradiation occurs by means of high-pressure lamps with a parabolic reflector, with a power of 28-30 kW, emitting ultraviolet radiation of wavelength between 186 nm and 240 nm. Irradiation time may vary between 5 and 15 seconds, equivalent to 2 to 4 m/min in terms of speed of the product with respect to the lamps. The distance between the lamps and the product is preferably between 10 and 50 cm.

The surface of the product must naturally be irradiated completely or at least in all its parts where a finishing coat is to be subsequently applied. For this purpose, and especially if the product has a complex three-dimensional configuration, it may be necessary to arrange the mutual rotation of the lamps and of the product by suitably combining the traveling and rotational speeds to obtain an irradiation of the product as uniform as possible.

The treated and irradiated product is then left for a few minutes at room temperature and is then sent to the subsequent finishing treatments. Such treatments may be performed at different times without causing any variation in the adherence characteristics of the finishing coat with respect to the treated product.

Practical tests carried out on the products treated according to the surface-activation process of the present invention and then subjected to a subsequent treatment for the application of a finishing coat have proved that the adherence characteristics of the treated product of polypropylene plastic material with respect to said finishing coats are completely satisfactory and are surprisingly improved with respect to the untreated product. The other characteristics of the product, such as its mechanical, dielectric and general physical-chemical properties, are furthermore fully unchanged, in contrast to what occurs with the conventional flame-hardening process.

From the preceding description it is immediately apparent that the present invention fully achieves the intended aim. It has in fact provided a process for the surface-activation of products made of polypropylene materials which eliminates all the disadvantages of conventional processes. In particular it is a process which can be easily automated, does not entail the use of dangerous materials or of unshielded flames, and finally is suitable for ensuring extremely satisfactory results both in terms of quality of the adherence properties achieved and of uniformity of said properties on the entire surface of the treated material. Finally, it should be noted that the surface-activation process according to the present invention, indeed by virtue of the fact that it is not based on the alteration of the surface characteristics of the product but forms thereon a layer of a different material, is fully independent from the surface chemical-physical characteristics of the individual products, in contrast with what occurs, as mentioned above, for the processes of the known art.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Process for the surface-activation of products made of plastic material based on polypropylene and mixtures or alloys thereof, characterized in that it comprises the following steps:

a) the application to said product of a liquid composition constituted by at least one polyolefinic resin, a photopolymerizable monomeric compound and a photoinitiator;

b) the drying of the product thus coated until it is completely dried;

c) the subjecting of said coated and dried product to an actinic light radiation source suitable for triggering the polymerization reaction of said photopolymerizable monomeric compound due to the catalytic triggering of said photoinitiator.

2. Surface-activation process according to claim 1, characterized in that the polyolefinic resin used in preparing the liquid composition used in step a) is a halogenated polypropylene resin.

3. Surface-activation process according to claim 1, characterized in that the photopolymerizable monomeric compound used in preparing the liquid composition used in step a) is an epoxy acrylic monomer.

4. Surface-activation process according to claim 1, characterized in that the photoinitiator used in preparing the liquid composition used in step a) is an ammino photoinitiator.

5. Surface-activation process according to claim 1, characterized in that the solvents used in preparing the liquid composition used in step a) are a mixture of halogenated aliphatic hydrocarbons and of aromatic hydrocarbons.

6. Surface-activation process according to any one of the preceding claims, characterized in that said liquid composition has the following formulation:
- halogenated polypropylene resin 0.80 - 1.10%
- epoxy acrylic monomer 0.60 - 1.20%
- ammino photoinitiator 0.03%
- halogenated aliphatic hydrocarbon 90.00 - 98.00%
- aromatic hydrocarbon 0.00 - 2.00%

7. Surface-activation process according to any one of claims 1 to 5, characterized in that said liquid composition has the following formulation:
- halogenated polypropylene resin 1.00%
- epoxy acrylic monomer 0.95%
- ammino photoinitiator 0.03% .
- halogenated aliphatic hydrocarbon 97.00%
- aromatic hydrocarbon 1.02%

8. Surface-activation process according to claim 1, characterized in that said liquid composition is applied to said product by immersion in a bath kept at a temperature between 50 and 60° C.

9. Surface-activation process according to claim 8, characterized in that the duration of the immersion of said product in the liquid composition is shorter than, or equal to, 15 seconds.

10. Surface-activation process according to claim 1, characterized in that the drying step b) is natural and is performed at a temperature of 22±5°C for a duration of approximately 15 minutes.

11. Surface-activation process according to claim 1, characterized in that the drying step b) is of the forced kind and is performed at a temperature of 50-80°C for a duration of approximately 3-5 minutes.

12. Surface-activation process according to claim 1, characterized in that the actinic light radiation used in step c) is an ultraviolet radiation of wavelength between 186 nm and 240 nm.

13. Surface-activation process according to claim 1, characterized in that said product is exposed to the actinic light radiation for a period of time between 5 and 15 seconds.

14. Surface-activation process according to claim 1, characterized in that the relative speed between the treated object and the actinic light radiation sources is between 2 and 4 m/min.

15. Liquid composition for application on products made of plastic material based on polypropylene and mixtures or alloys thereof, partially polymerizable as an effect of an actinic light radiation, and having the following formulation:
- halogenated polypropylene resin 0.80 - 1.10%
- epoxy acrylic monomer 0.60 - 1.20%
- ammino photoinitiator 0.03%
- halogenated aliphatic hydrocarbon 90.00 - 98.00%
- aromatic hydrocarbon 0.00 - 2.00%

16. Liquid composition according to claim 15, having the following formulation:
- halogenated polypropylene resin 1.00%
- epoxy acrylic monomer 0.95%
- ammino photoinitiator 0.03%
- halogenated aliphatic hydrocarbon 97.00%
- aromatic hydrocarbon 1.02%